# EUROPEAN PATENT SPECIFICATION

(11) **EP 1 696 690 B1**
(45) Date of publication and mention of the grant of the patent: **02.09.2009**
(21) Application number: 06250905.4
(22) Date of filing: 21.02.2006
(51) Int. Cl.: H04W 36/10, H04L 12/56

(54) **Transferring packets from an original network node to a destination network node depending on a packet classification**
Übertragung von Paketen von einem ursprünglichen Netzknoten zu einem Zielnetzknoten abhängig von einer Paketklassifikation
Transfert de paquets d'un noeud de réseau original à un noeud de réseau de destination en fonction d'une classification de paquets

(30) Priority: 23.02.2005 JP 2005047877
(43) Date of publication of application: 30.08.2006
(73) Proprietor: NTT DoCoMo, Inc., Tokyo 100-6150 (JP)
(72) Inventor: Kato, Yasuhiro, Int. Prop. Dpt., NTT DoCoMo, Inc., Chiyoda-ku Tokyo 100-6150 (JP); Takahashi, Hideaki, Int Prop. Dpt. NTT DoCoMo, Inc, Chiyoda-ku Tokyo 100-6150 (JP); Motegi, Masayuki, Int. Prop. Dpt. NTT DoCoMo, Inc., Chiyoda-ku Tokyo 100-6150 (JP); Nakamura, Takehiro, Int. Prop. Dpt NTT DoCoMo Inc., Chiyoda-ku Tokyo 100-6150 (JP)
(74) Representative: Maury, Richard Philip

(56) References cited:
- EP-A- 1 199 841
- WO-A-20/06041269

## Description

### BACKGROUND OF THE INVENTION

The present invention generally relates to a mobile communication system and more specifically relates to mobile communication systems and packet data transfer control methods in which packets are transferred between network nodes for handing-over.

Handing-over technologies are widely utilized in the PDC (Personal Digital Cellular) packet system and the IMT-2000 system. In these systems, handing-over during communications over a common channel is known.

In these systems, when inter radio controlling station hand-over (that is, hand-over between radio controlling stations) is generated, radio control information held by the original radio controlling station and untransmitted packets are transferred to a destination radio controlling station.

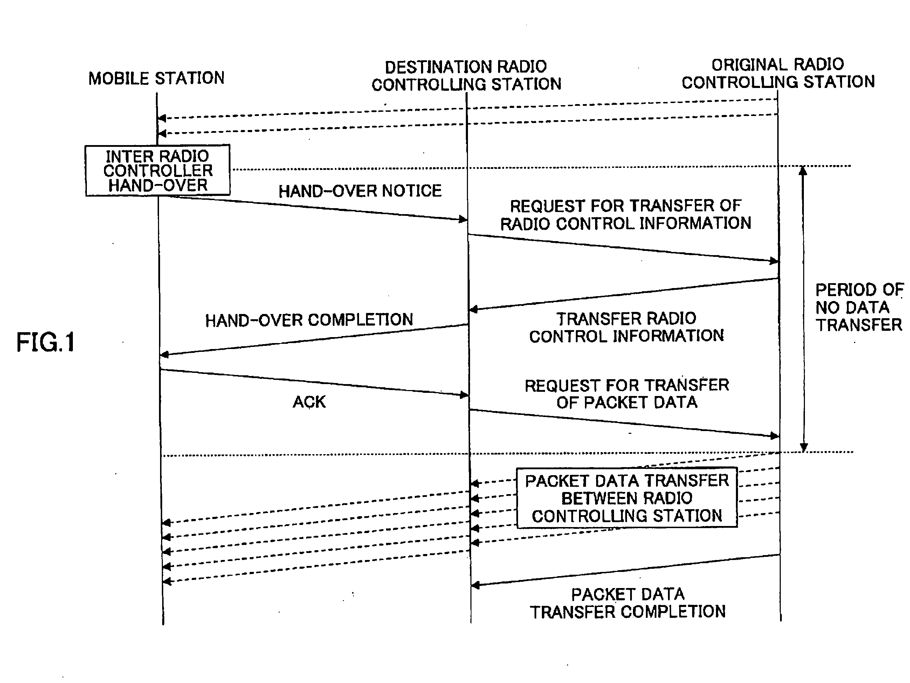

As an example, Fig. 1 shows inter radio controlling station hand-over in the IMT-2000 system, which is explained below.

In this hand-over control, a mobile station that has moved from one cell to another sends a hand-over notice to a new destination radio controlling station via a base station.

The destination radio controlling station determines whether the hand-over is from another radio controlling station, that is, whether the hand-over is an inter radio controlling station hand-over. If it is determined that the hand-over is an inter radio controlling station hand-over, the destination radio controller sends a radio control information transfer request to the original radio controlling station.

After the original radio controlling station has received the radio control information transfer request, the original radio controlling station transfers radio control information held by itself to the destination radio controlling station. After the destination radio controlling station has received the radio control information, the destination radio controlling station confirms connection with the mobile station based on the transferred radio control information, and sends a hand-over completion notice to the mobile station.

After the mobile station has received the hand-over completion notice, the mobile station sends an ACK signal responding to the hand-over completion to the destination radio controlling station.

After the destination radio controlling station has received the ACK signal from the mobile station, the destination radio controlling station sends a packet data transfer request to the original radio controlling station.

In response to the packet data transfer request, the original radio controlling station transfers packets to the destination radio controlling station (packet data transfer between radio controlling stations). The destination radio controlling station forwards the transferred and received packets to the mobile station. When the packet transfer is completed the original radio controlling station sends a packet transfer completion notice to the destination radio controlling station.

In this manner, the destination radio controlling station can start packet transfer after confirming establishment of a radio link with the mobile station. In this way, signal loss during handing-over is prevented so as to maintain packet communication quality.

In the above-mentioned hand-over control, however, it takes a long time from inter radio controlling station hand-over to packet transfer. This delay of packet transfer badly affects communication services requiring real time transmission, such as voice communications.

There is another known hand-over control technology in a mobile communication system having no radio controlling station in which packets are transferred between base stations for inter base station hand-over.

In this technology, a timer is provided to manage allowable time duration for transferring packets between base stations, in order to avoid signal loss. In this manner, by shortening the timer, it is possible to forcibly shorten the delay in transferring packets (See patent document #1).

However, the procedure for establishing a radio link between a base station and a mobile station or timing for starting packet transfer is not disclosed in the prior art.
[Patent Document #1] Japanese Patent Laid-Open Application No. 2004-235883

The above-mentioned prior art has the following problem.

When hand-over is performed between network nodes, packets are not transferred within the required transferring time duration.

In radio communication systems, it is necessary to confirm that a communication terminal is in communication before starting communications.

In this case, it is important to avoid signal loss in non-real time service. On the other hand, it is important to avoid data transmission delay in real time service. Therefore, waiting until being in communication is confirmed sometimes degrades service quality.

EP-A-1199841 discloses a mobile communication system in which packets are transferred between radio controlling stations in different cells for handing-over a connection with a mobile station from cell to cell, comprising a home agent having a packet data classifying unit that classifies packets based on a required transferring period; and a transfer controlling unit that transfers the classified packets, classification by classification, from an original radio controlling station to a destination radio controlling station in a different cell.

The invention provides a mobile communication system as defined in Claim 1; and a packet data transfer control method as defined in Claim 2.

The present invention can improve communications quality of packet data transfer between network nodes during handing-over.

The classifying step may classify packets based on a transport layer protocol added to the packets.

### BRIEF DESCRIPTION OF THE DRAWINGS

Fig. 1 is a sequence chart illustrating packet data transfer control after inter radio controlling station hand-over;
Fig. 2 is a schematic view illustrating a mobile communication system according to one embodiment of the present invention;
Fig. 3 is a block diagram of a packet data transferring unit according to the embodiment of the present invention; and
Fig. 4 is sequence chart illustrating packet data transfer control according to the embodiment of the present invention.

### DESCRIPTION OF THE PREFERRED EMBODIMENTS

The following is a description of embodiments of the present invention, with reference to the accompanying drawings.

Throughout all the figures, members and parts having the same or similar functions are assigned the same or similar reference signs, and redundant explanations are omitted.

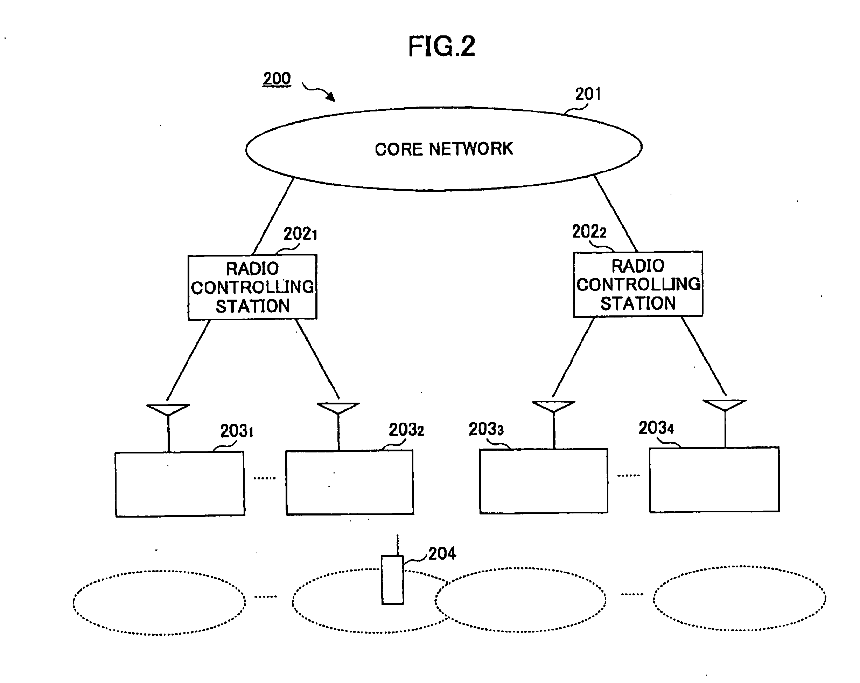

Fig. 2 shows a structure of a mobile communication system 200 according to one embodiment of the present invention, which is explained below.

The mobile communication system 200 comprises radio controlling stations 202 (202₁, 202₂) connected to a core network 201, base stations 203 (203₁, 203₂, 203₃, 203₄) connected to the corresponding radio controlling stations 202, and a mobile station 204 connected to one of the base stations 203.

The core network 201 may be using the IP protocol, such as a packet exchange network.

The radio controlling stations 202 perform radio control of mobile stations when handing-over, and perform exchange between the radio protocol and the network protocol. When handing-over is done between radio controlling stations, the radio controlling stations 202 perform packet transfer processing between radio controlling stations.

The base stations 203 mainly perform base band processing and RF band physical layer processing and so on.

All layers from the physical layer to the application layers are terminated at the mobile station 204.

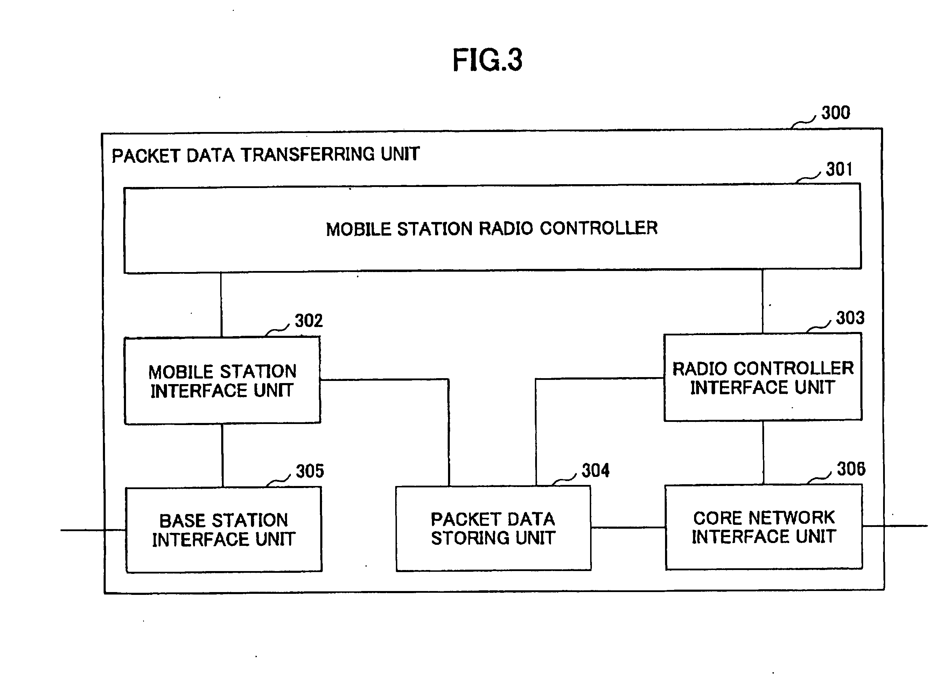

Fig. 3 shows a packet data transferring unit 300 in the embodiment of the present invention, which is explained below.

The packet data transferring unit 300 may be included in the radio controlling station 202. The packet transferring unit 300 according to the embodiment of the present invention comprises a mobile station radio controller 301 as a packet data classifying unit and a transfer controlling unit, a mobile station interface unit 302 and a radio controller interface unit 303 each connected to the mobile station radio controller 301, a base station interface unit 305 and a packet data storing unit 304 each connected to the mobile station interface unit 302, and a core network interface unit 306 connected to the radio controller interface unit 303. The packet data storing unit 304 is further connected to the radio controller interface unit 303 and the core network interface unit 306.

The mobile station radio controller 301 manages radio control information necessary for establishing a radio link for each mobile station, via the mobile station interface unit 302 and the radio controller interface unit 303. The radio control information includes provided service information, subscriber authentication information, radio conditions, and mobile station hardware capacity. The mobile station radio controller 301 further controls hand-over, via the mobile station interface unit 302 and the radio controller interface unit 303.

The mobile station radio controller 301 classifies packets transmitted between network nodes, for example between mobile stations. The classification is done based on real time characteristics, that is, a required transfer time duration or period. For example, the mobile station radio controller 301 classifies or divides packets into two categories, real-time-packets and non-real-time-packets. The real-time-packets should be transferred in a real time manner. The non-real-time packets do not have to be transferred in a real time manner. When the mobile station performs hand-over between radio controlling stations, the mobile station radio controller unit 301 determines a timing at which packets are transferred between the radio controlling stations.

The mobile station interface unit 302 performs protocol exchange processing between the network protocol and the radio protocol, in accordance with instructions by the mobile station radio controller 301.

When hand-over is performed between radio controlling stations, the radio controller interface unit 303 performs protocol processing of packets transferred between the radio controlling stations, in accordance with instructions by the mobile station radio controller 301.

The core network interface unit 306 performs protocol processing for the core network, and mainly performs low layer protocol processing. When hand-over is performed between radio controlling stations, the core network interface unit 306 transmits and receives signals to and from the radio controller.

The base station interface unit 305 performs protocol processing for the base stations, and mainly performs low layer protocol processing.

The packet data storing unit 304 temporarily buffers or stores packets to be transmitted between the mobile station interface unit 302 and the core network interface unit 306. The packet data storing unit 304 manages packets to be transmitted between radio controlling stations, which are classified by real time characteristics. The packet data storing unit 304 manages the transmitting order of packet data to be transmitted to the mobile station interface unit 302.

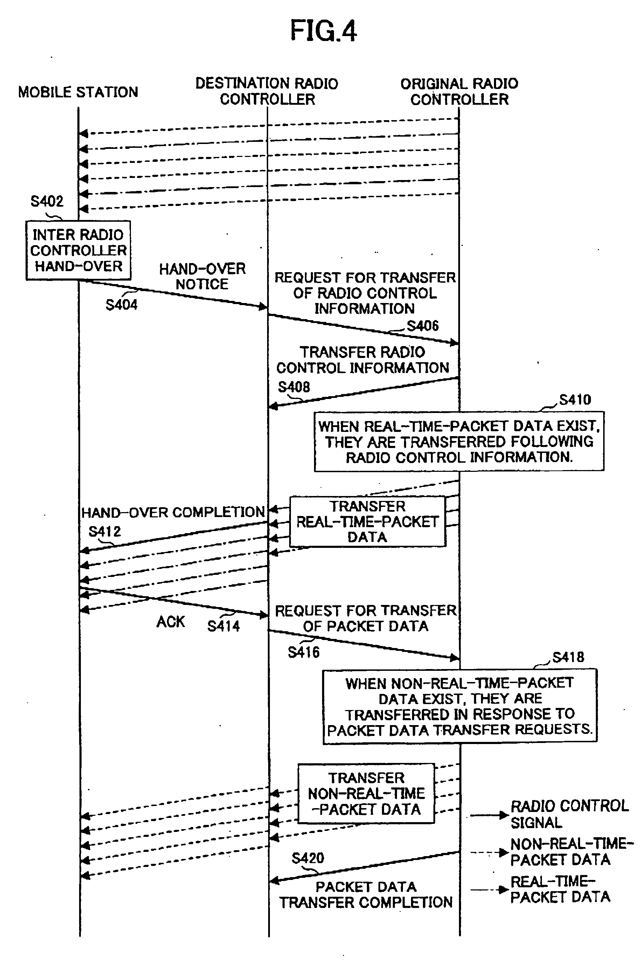

Fig. 4 shows packet data transfer control processing according to the embodiment of the present invention, which is explained below.

In this embodiment, the radio controlling station 202 is provided with the packet data transferring unit 300. In this embodiment, with respect to a case where hand-over is generated between radio controlling stations, for example between the radio controlling stations 202₁ and 202₂, its packet data transfer control processing is explained.

Between the mobile station 204 and a radio controlling station such as the radio controlling station 202₁, packets for given services are transmitted and received via the base station 203₂. The mobile station radio controller 301 in the radio controlling station 202₁ classifies packets transferred from the mobile station 204, as real-time-packets or non-real-time-packets by real time characteristics, and stores them in the packet data storing unit 304 via the mobile station interface unit 302.

One classifying method is to add identification to packets, which indicates a real-time-packet or a non-real-time-packet. Another classifying method is recognizing the transport layer protocol assigned to the header of each packet. If it is UDP, then the packet is determined to be a real-time packet. If it is TCP, the packet is determined to be a non-real-time-packet.

During communicating with a cell, the mobile station 204 performs hand-over when it finds another cell having better conditions. For example, when the mobile station 204 performs hand-over from the cell (area) covered by the base station 203₂ to the cell (area) covered by the base station 203₃, inter radio controlling station hand-over is performed from the radio controlling station 202₁ to the radio controlling station 202₂.

First, inter radio controlling station hand-over (HO) is generated at step S402. After the hand-over is done, the mobile station 204 sends a hand-over notice to the destination radio controlling station 202₂ via the mobile station 203₃ at step S404.

After the destination radio controlling station 202₂ has received the hand-over notice, the mobile radio controller 301 in the destination radio controlling station 202₂ determines whether the hand-over of the mobile station 204 is from another radio controlling station. If it is determined that the mobile station 204 has performed hand-over from another radio controller, the mobile radio controller 301 transmits a radio control information transfer request to the original radio controlling station 202₁ at step S406. As a result, the radio control information transfer request is transmitted via the radio controlling station interface unit 303 and the core network interface unit 306.

After the original radio controlling station 202₁ has received the radio control information transfer request, the mobile station radio controller 301 in the original radio controlling station 202₁ transfers radio control information held by its own radio controlling station 202₁ to the destination radio controlling station 202₂ at step S408. If real-time packets exist in the packet data storing unit 304 in the original radio controlling station 202₁, the mobile station radio controller 301 in the original radio controlling station 202₁ starts transferring the real-time packets following the transfer of the radio control information at step S410. Consequently, the radio control information and the real-time packets are transmitted via the radio station interface 303 and the core network interface 306.

After the destination radio controlling station 202₂ has received the radio control information, the mobile station radio controller 301 in the destination radio controlling station 202₂ transfers a hand-over completion notice to the mobile station 204 at step S412. If the mobile station radio controller 301 in the destination radio controlling stations 202₂ has received packets successfully, it forwards the packets to the mobile station 204 following the hand-over completion notice. Consequently, the hand-over completion notice and the packets are transmitted via the mobile station interface 302 and the base station interface unit 305 in the destination radio controlling station 202₂.

After the mobile station 204 has received the hand-over completion notice, it transmits ACK signal to the destination radio controlling station 202₂ at step S414. The ACK signal indicates that the mobile station 204 has received the hand-over completion notice.

After the destination radio controlling station 202₂ receives the ACK signal, the mobile radio controller 301 determines that a radio link is properly established, and transmits a packet data transfer request to the original radio controlling station 202₁ at step S416. Consequently, the packet data transfer request is transmitted via the radio controller interface 303 and the core network interface 306.

After the original radio controlling station 202₁ has received the packet data transfer request, the mobile station radio controller 301 in the original radio controlling station 202₁ transmits non-real-time packets to the destination radio controlling station 202₂ at step S418, if the non-real-time packets exist in the packet data storing unit 304. Consequently, the non-real-time packets are transmitted via the radio controller interface unit 303 and the core network interface unit 306.

After the destination radio controlling station 202₂ has received the non-real-time packets, the mobile station radio controller 301 in the destination radio controlling station 202₂ confirms that the received non-real-time packets have been transmitted from the original radio controlling station 202₁. The mobile station radio controller 301 in the destination radio controlling station 202₂ forwards the received non-real-time packets to the mobile station 204 via the mobile station interface unit 302 and the base station interface unit 305.

If the mobile station radio controller 301 in the original radio controlling station 202₁ determines that the transfer of all the packets has been completed, it transmits a packet data transfer completion notice to the destination radio controlling station 202₂ at step S420.

In the manner explained above, the packet data transferring unit 300 transmits real-time packets as soon as possible even before the establishment of a radio link, in order to avoid transfer delay of the real-time packet. On the other hand, the packet data transferring unit 300 transmits non-real-time packets to the mobile station 204 after confirming the establishment of a radio link, in order to put priority on secure transmission.

In this embodiment, the packet date transferring unit 300 is provided in the radio controlling stations. However, such packet transferring function may be provided in the base stations, which can deal with inter base station hand-over.

According to the embodiment of the present invention, timing for starting packet transfer between network nodes after handing-over can be adequately selected based on real time characteristics required for the packets to be transferred, and therefore the optimum communication quality (service quality) is obtained per service.

### INDUSTRIAL APPLICABILITY

A mobile communication system and packet data transferring control method according to the present invention can be utilized for mobile communication systems in which packet transfer between network nodes is controlled.

## Claims

1. A mobile communication system in which packets are transferred between an original radio controlling station (202₁) and a destination radio controlling station (202₂) in a different cell, for inter radio controlling station hand-over of a connection with a mobile station, the original radio controlling station comprising:
a packet data classifying unit (301) arranged to classify packets into a real-time-packet to be transferred in a real time manner or a non-real-time packet to be transferred in a non-real time manner; and
a transfer controlling unit (301) arranged to transfer (S410) the real-time-packet before confirming radio link establishment and to transfer (S418) the non-real-time packet after confirming (S414) radio link establishment, from the original radio controlling station to the destination radio controlling station;
the original radio controlling station being arranged to classify and transfer the packets when the mobile station performs the hand-over from a cell controlled by the original radio controlling station to a cell controlled by the destination radio controlling station.

2. A packet data transfer control method for use in a mobile communication system in which packets are transferred between an original radio controlling station (202₁) and a destination radio controlling station (202₂) in a different cell, for inter radio controlling station hand-over of a connection with a mobile station,
the original radio controlling station:
classifying packets into a real-time-packet to be transferred in a real time manner or a non-real-time packet to be transferred in a non-real time manner; and
transferring (S410) the real-time-packet before confirming radio link establishment and transferring (S418) the non-real-time packet after confirming (S414) radio link establishment, from the original radio controlling station to the destination radio controlling station when the mobile station performs the hand-over from a cell controlled by the original radio controlling station to a cell controlled by the destination radio controlling station.

3. The packet data transfer control method as claimed in Claim 2, wherein:
the classifying step classifies packets based on a transport layer protocol that is added to the packets.

## Patentansprüche

1. Mobilkommunikationssystem, in dem Pakete zwischen einer ursprünglichen Funksteuerstation (202₁) und einer Ziel-Funksteuerstation (202₂) in einer anderen Zelle übertragen werden, zum Handover einer Verbindung mit einer Mobilstation zwischen Funksteuerstationen, wobei die ursprüngliche Funksteuerstation umfasst:
eine Paketdaten-Klassiftkationseinheit (301), die dazu angeordnet ist, Pakete als ein auf eine Echtzeitweise zu übertragendes Echtzeitpaket oder ein auf eine Nichtechtzeitweise zu übertragendes Nichtechtzeitpaket zu klassifizieren; und
eine Übertragungssteuereinheit (301), angeordnet zum Übertragen (S410) des Echtzeitpakets vor Bestätigung der Funklinkherstellung und zum Übertragen (S418) des Nichtechtzeitpakets nach Bestätigung (S414) der Funklinkherstellung von der ursprünglichen Funksteuerstation an die Ziel-Funksteuerstation;
wobei die ursprüngliche Funksteuerstation dazu angeordnet ist, die Pakete zu klassifizierten und zu übertragen, wenn die Mobilstation den Handover von einer durch die ursprüngliche Funksteuerstation gesteuerten Zelle an eine durch die Ziel-Funksteuerstation gesteuerte Zelle ausführt.

2. Verfahren zur Paketdaten-Übertragungssteuerung zur Verwendung in einem Mobilkommunikationssystem, in dem Pakete zwischen einer ursprünglichen Funksteuerstation (202₁) und einer Ziel-Funksteuerstation (202₂) in einer anderen Zelle übertragen werden, zum Handover einer Verbindung mit einer Mobilstation zwischen Funksteuerstationen,
wobei die ursprüngliche Funksteuerstation:
Pakete als ein auf eine Echtzeitweise zu übertragendes Echtzeitpaket oder ein auf eine Nichtechtzeitweise zu übertragendes Nichtechtzeitpaket klassifiziert; und
das Echtzeitpaket vor Bestätigung der Funklinkherstellung überträgt (S410) und das Nichtechtzeitpaket nach Bestätigung (S414) der Funklinkherstellung von der ursprünglichen Funksteuerstation an die Ziel-Funksteuerstation überträgt (S418), wenn die Mobilstation den Handover von einer durch die ursprüngliche Funksteuerstation gesteuerten Zelle an eine durch die Ziel-Funksteuerstation gesteuerte Zelle ausführt.

3. Verfahren zur Paketdaten-Übertragungssteuerung nach Anspruch 2, worin:
der Klassifikationsschritt Pakete auf der Basis eines Transportschichtprotokolls klassifiziert, das den Paketen hinzugefügt wird.

## Revendications

1. Système de communication mobile dans lequel des paquets sont transmis entre une station de commande radio d'origine (202₁) et une station de commande radio de destination (202₂) dans une cellule distincte, pour effectuer un transfert cellulaire d'une connexion à une station mobile entre des stations de commande radio, la station de commande radio d'origine comprenant :
une unité de classification de données en paquets (301) agencée de manière à classer les paquets en paquet en temps réel destiné à être transféré d'une manière en temps réel ou paquet non en temps réel destiné à être transféré d'une manière non en temps réel ; et
une unité de commande de transfert (301) agencée de manière à transférer (S410) le paquet en temps réel avant de confirmer l'établissement de liaison radio et à transférer (S418) le paquet non temps réel après avoir confirmé (S414) l'établissement de liaison radio, de la station de commande radio d'origine à la station de commande radio de destination ;
la station de commande radio d'origine étant agencée de manière à classer et à transférer les paquets lorsque la station mobile met en oeuvre le transfert intercellulaire d'une cellule commandée par la station de commande radio d'origine à une cellule commandée par la station de commande radio de destination.

2. Procédé de commande de transfert de données en paquets destiné à être utilisé dans un système de communication mobile dans lequel des paquets sont transmis entre une station de commande radio d'origine (202₁) et une station de commande radio de destination (202₂) dans une cellule distincte, pour effectuer un transfert intercellulaire d'une connexion à une station mobile entre des stations de commande radio,
la station de commande radio d'origine:
classant les paquets en paquet en temps réel destiné à être transféré d'une manière en temps réel ou paquet non temps réel destiné à être transféré d'une manière non en temps réel ; et
transférant (S410) le paquet en temps réel avant de confirmer l'établissement de liaison radio et transférant (S418) le paquet non temps réel après avoir confirmé (S414) l'établissement de liaison radio, de la station de commande radio d'origine à la station de commande radio de destination, lorsque la station mobile met en oeuvre le transfert intercellulaire d'une cellule commandée par la station de commande radio d'origine à une cellule commandée par la station de commande radio de destination.

3. Procécé de commande de transfert de données en paquets selon la revendication 2, dans lequel :
l'étape de classification classe les paquets sur la base d'un protocole de couche de transport qui est ajouté aux paquets.
